# EUROPÄISCHE PATENTSCHRIFT

(11) **EP 2 026 387 B1**
(45) Veröffentlichungstag und Bekanntmachung des Hinweises auf die Patenterteilung: **06.03.2013**
(21) Anmeldenummer: 08013995.9
(22) Anmeldetag: 05.08.2008
(51) Int. Cl.: H01M 2/02, H01M 2/10, H01M 2/20, H01M 6/46, H01M 6/50, H01M 10/50, H01M 10/04

(54) **Elektrochemische Energiespeichereinheit**
Electrochemical energy storage unit
Accumulateur d'énergie électrochimique

(30) Priorität: 08.08.2007 DE 102007037416
(43) Veröffentlichungstag der Anmeldung: 18.02.2009
(73) Patentinhaber: Behr GmbH & Co. KG, 70469 Stuttgart (DE)
(72) Erfinder: Damsohn, Herbert, 73773 Aichwald (DE); Isermeyer, Tobias, 74245 Löwenstein (DE); Eckstein, Jürgen, 71409 Schwaikheim (DE); Fehrenbacher, Christoph, 70597 Stuttgart (DE); Kohlberger, Markus, 70174 Stuttgart (DE); Herrmann, Hans-Georg, 70619 Stuttgart (DE); Schiehlen, Thomas, 89174 Altheim (DE)
(74) Vertreter: Grauel, Andreas

(56) Entgegenhaltungen:
- EP-A- 1 701 404
- EP-A- 1 753 058
- WO-A-2006/101342
- WO-A-2008/122384
- DE-A1-102005 031 504
- JP-A- 1 112 652
- US-A- 5 756 227
- US-A1- 2003 165 734

## Beschreibung

Die Erfindung betrifft eine Elektrochemische Energiespeichereinheit nach dem Oberbegriff des Anspruchs 1.

Insbesondere aus dem Bau von Kraftfahrzeugen mit elektrischem Antrieb, zum Beispiel einem Hybrid-Antrieb, sind elektrochemische Energiespeichereinheiten von hoher Leistungsdichte bekannt. Unter anderem handelt es sich dabei um Lithium-lonen oder Lithium-Polymer Energiespeichereinheiten, die beispielsweise aus gestapelten Flachzellen bestehen.

Ferner ist es bekannt, dass bei dem für diese Einsatzzwecke geforderten Profil so viel Verlustwärme erzeugt wird, dass eine permanente Kühlung derartiger elektrochemischer Energiespeichereinheiten unumgänglich ist.

Die DE 100 03 740 C1 zeigt eine Batterie mit einer Wärmeabführeinrichtung, wobei eine Mehrzahl von Batteriezellen in Serie geschaltet sind, wobei die Serienanordnung der Batteriezellen einen äußeren positiven Pol und einen äußeren negativen Pol aufweist, wobei an den Polen Zellverbinder angebracht sind und wobei Mittel zur Abfuhr von Verlustwärme der Serienanordnung vorgesehen sind, wobei zumindest ein Zellverbinder mit wärmeabführenden Mitteln verbunden ist.

Die WO 2006/101342 A1 offenbart eine Energiespeicher einheit umfassend eine Mehrzahl von Flachzellen, wobei Zwischenden flächigen Seiten benachbarter Flochdizellen ein Rahmen angeordnet ist.

Eine derartige Anordnung lässt jedoch noch einige Wünsche offen. Insbesondere wird durch die Vielzahl der Zellverbinder die Montage erheblich erschwert.

Es ist daher Aufgabe der Erfindung eine elektrochemische Energiespeichereinheit zur Verfügung zu stellen, bei der durch eine Verringerung der Anzahl der Teile die Montage erheblich vereinfacht wird. Ferner soll eine ausreichende Kühlung der elektrochemischen Energiespeichereinheit während der gesamten Betriebszeit gewährleistet werden.

Diese Aufgabe wird gelöst durch eine elektrochemische Speichereinheit mit den Merkmalen des Anspruchs 1. Vorteilhafte Ausgestaltungen sind Gegenstand der Unteransprüche.

In einem Grundgedanken der Erfindung ist eine elektrochemische Energiespeichereinheit mit einer Mehrzahl von Flachzellen ausgeführt, wobei die Flachzellen jeweils mindestens zwei Ableiter und eine Ummantelung mit einer ersten und einer zweiten Stirnseite und einer ersten und einer zweiten flächigen Seite aufweisen, wobei die Ableiter zumindest teilweise aus der ersten und/oder zweiten Stirnseite hervortreten und zumindest ein Ableiter einer ersten Flachzelle mit zumindest einem Ableiter einer zweiten Flachzelle über zumindest ein Verbindungselement elektrisch miteinander verbunden sind. Im Sinne der Erfindung wird unter "flächiger Seite" die Seite der Flachzelle mit der größeren Fläche und unter "Stirnseite" die Seite der Flachzelle mit der kleineren Fläche verstanden. Die Speichereinheit ist derart aufgebaut, dass die Flachzellen mit ihren flächigen Seiten zueinander angeordnet sind und sich somit zwei gemeinsame Stirnseiten der Flachzellen ergeben. Durch die parallele Anordnung der Flachzellen zueinander ergibt sich zudem ein stapelartiger Aufbau.

Erfindungsgemäß ist nun zwischen den flächigen Seiten benachbarter Flachzellen ein Rahmen angeordnet. Bevorzugt wird dieser Rahmen mit einem Verbindungselement verbunden, insbesondere verclipst. Durch eine derartige Anordnung kann die Anzahl der während der Montage zu positionierenden Teile erheblich reduziert werden.

Der Rahmen, der bevorzugt aus Kunststoff ist, wird mit einer Flachzelle form-und/oder stoffschlüssig zu einer Baueinheit verbunden, insbesondere verklebt.

In einer weiteren Ausführungsform weist der Rahmen in seiner Mitte eine Aussparung auf, so dass die Flachzelle nur in einem Randbereich mit dem Rahmen verbunden ist. Bevorzugt ist zwischen jeder Flachzelle ein Rahmen angeordnet. In einer alternativen Ausführungsform ist ein Rahmen nach jeder zweiten, dritten oder vierten Flachzelle angeordnet.

Der Rahmen, der bevorzugt rechteckförmig ausgebildet ist, weist in einer weiteren Ausführungsform an seinen Ecken, insbesondere an allen Ecken, Positionier- und/oder Verbindungsmittel auf, die ein genaues positionieren und/öder verbinden der einzelnen Baueinheiten, bestehend aus Flachzelle und Rahmen, zu einem Zellstapel ermöglicht.

In einer weiteren Ausführungsform können die einzelnen Baueinheiten, bestehend aus Flachzelle und Rahmen, auch miteinander verklebt werden.

In einer weiteren Ausführungsform der Erfindung sind die Ableiter mit einem Verbindungselement stoffschlüssig, insbesondere durch ein Ultraschallschweißverfahren, verbunden. Durch dieses Verfahren wird der Wärmeeintrag während der Montage der Speichereinheit erheblich reduziert.

Erfindungsgemäß sind die Verbindungselemente form- und/oder kraftschlüssig durch Niete mit einer Wärmesenke verbunden. Durch eine derartige Anordnung wird eine thermisch effiziente Anbindung der Wärmesenke an die Verbindungselemente erreicht. Die Wärmesenke kann beispielsweise durch kühl- oder kältemitteldurchströmte Rohre, insbesondere Flachrohre, dargestellt werden. Selbstverständlich ist es auch möglich, die Wärmesenke, die insbesondere plattenförmig ausgebildet ist, mit Kühlluft zu beströmen.

Erfindungsgemäß sind die Niete einstückig an den Rahmen angeformt. Somit wird eine weitere Reduktion der bei der Montage verwendeten Teile erreicht. Die Niete sind bevorzugt aus Kunststoff hergestellt.

In einer weiteren Ausführungsform der Erfindung sind Wärmesenken auf beiden Stirnseiten der Flachzellen angeordnet.

In einer weiteren Ausführungsform der Erfindung ist zwischen der Wärmesenke und den Verbindungselementen, die aus Metall, bevorzugt Aluminium oder Kupfer, bestehen, eine elektrisch isolierende Schicht, insbesondere eine Wärmeleitfolie angeordnet, um Kurzschlüsse über die Wärmesenke zu vermeiden.

In einer weiteren Ausführungsform ist das Verbindungselement U-förmig, I-förmig, L-förmig oder kastenförmig ausgebildet.

In einer weiteren Ausführungsform sind die Flachzellen als Lithium-lonen oder Lithium-Polymer-Zellen ausgebildet.

Weitere wichtige Merkmale der vorliegenden Erfindung ergeben sich aus der nachfolgenden detaillierten Beschreibung in Verbindung mit den Ansprüchen und den Zeichnungen.

Nachfolgend werden bevorzugte Ausführungsbeispiele einer erfindungsgemäßen elektrochemischen Speichereinheit beschrieben und anhand der anliegenden Zeichnungen näher erläutert.

Es zeigen:
Fig. 1a eine schematische Seitenansicht einer erfindungsgemäßen Flachzelle mit Rahmen;
Fig. 1b eine schematische Draufsicht auf ein erfindungsgemäßes Verbindungselement;
Fig. 2 eine schematische Ansicht einer erfindungsgemäßen Flachzelle mit Rahmen entlang der Linie II-II aus Fig. 1a;
Fig. 3 eine schematische Vorderansicht einer erfindungsgemäßen elektrochemischen Energiespeichereinheit;
Fig. 4 eine schematische Vorderansicht eines Ausschnittes einer erfindungsgemäßen elektrochemischen Energiespeichereinheit gemäß eines weiteren Ausführungsbeispiels:

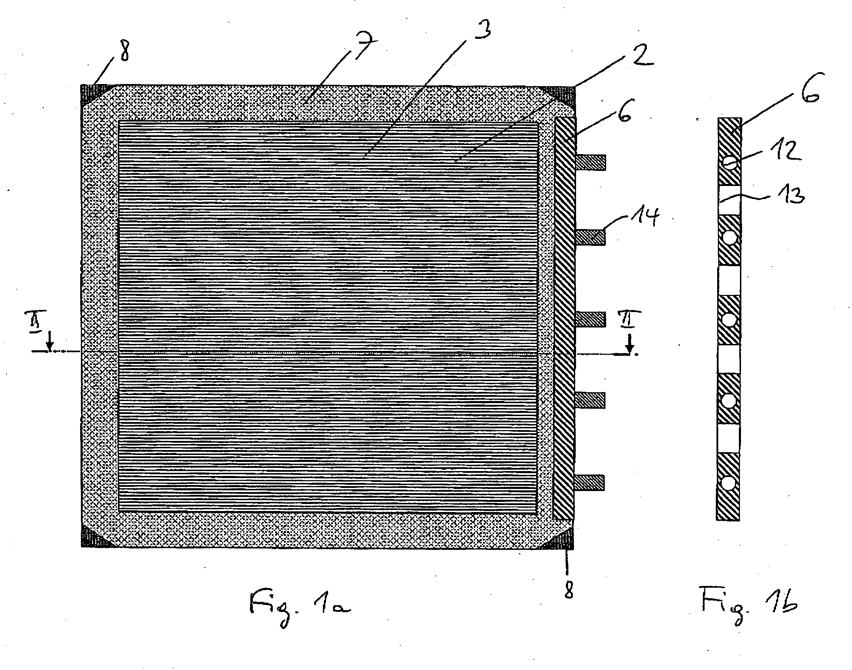

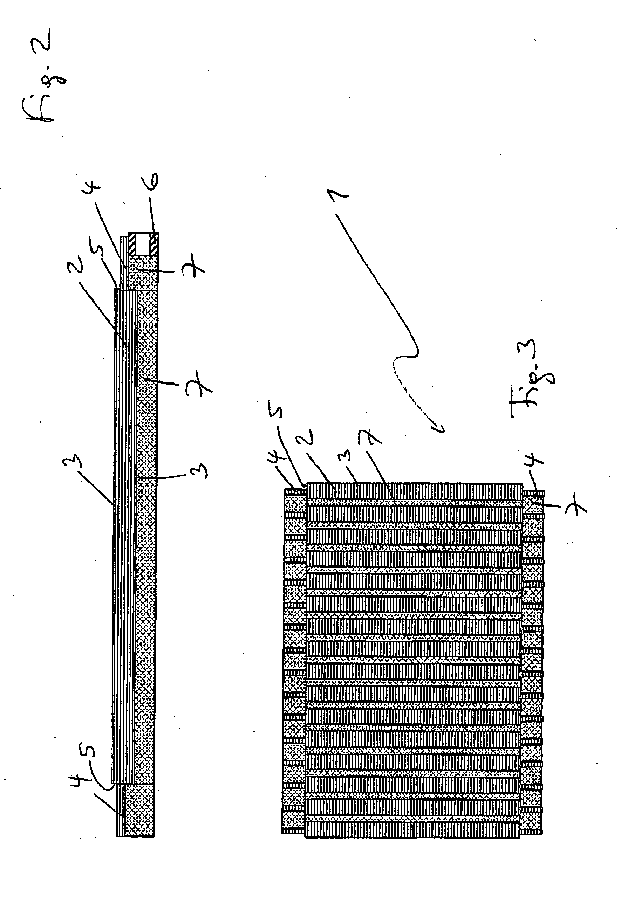

Fig. 1a zeigt eine schematische Ansicht einer erfindungsgemäßen Flachzelle 2. Derartige Flachzellen werden mit ihren flächigen Seiten 3 zueinander angeordnet und bilden dadurch einen Zellstapel aus. Eine elektrochemische Energiespeichereinheit 1, wie sie in Fig. 3 schematisch dargestellt ist, umfasst typischerweise etwa vierzig Flachzellen. Es ist jedoch durchaus möglich, dass die Energiespeichereinheit mehr oder weniger als vierzig Zellen umfasst. Zur Vereinfachung des Aufbaus des Zellverbundes wird ein Rahmen 7 auf die Flachzelle 2 aufgebracht. Hierbei ist der Rahmen 7 form-und/oder stoffschlüssig mit der Flachzelle 2 verbunden, beispielsweise durch Kleben oder Schweißen. Der Rahmen wird vorzugsweise aus Kunststoff hergestellt und ist mit der Flachzelle 2 in einem Randbereich der Flachzelle verbunden. In der Mitte des Rahmens 7 ist eine Aussparung ausgebildet (nicht dargestellt), so dass Dickenschwankungen der Flachzellen, die sich abhängig vom Ladezustand ergeben, möglich sind.

In einer bevorzugten Ausführungsform der Erfindung gemäß Fig. 3 ist ein Rahmen 7 nach jeder Flachzelle 2 angeordnet. In einer alternativen Ausführungsform ist es möglich, dass ein erfindungsgemäßer Rahmen nur nach jeder zweiten oder dritten Flachzelle angeordnet ist.

Der Rahmen 7, der im Wesentlichen rechteckförmig ausgebildet ist, weist an seinen Ecken Positionier- und/oder Verbindungsmittel 8 auf, die ein genaues Positionieren und/oder Verbinden einer Baueinheit, die eine Flachzelle und einen Rahmen umfasst, mit einer benachbarten Baueinheit ermöglicht. Durch eine derartige Ausführungsform kann sehr einfach ein Zellstapel aufgebaut werden.

Beispielsweise können die Mittel 8 als Dome, Haken, Rastnasen oder Clipsverbindungen ausgebildet sein. Gemäß Fig. 8 sind die Positionier- und/oder Verbindungsmittel 8 an allen Ecken des Rahmens 7 ausgebildet. In einem nicht gezeigten Ausführungsbeispiel sind derartige Mittel 8 nur an diagonal gegenüberliegenden Ecken ausgebildet.

Gemäß Fig. 1a ist ein Verbindungselement 6 auf den Rahmen 7 gefügt, beispielsweise verclipst. Das Verbindungselement 6 verbindet einen nicht dargestellten Ableiter einer ersten Flachzelle elektrisch und mechanisch mit einem nicht dargestellten Ableiter einer zweiten Flachzelle.

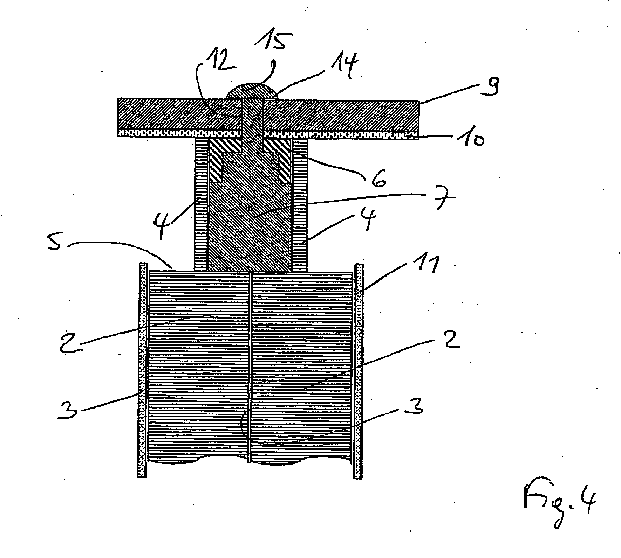

Gemäß Fig. 1b weist das Verbindungselement 6 mehrere Durchbrüche 12 für Kunststoffdome 14 des Rahmens 7 auf. Bevorzugt sind diese Dorne 14 einstückig an den Rahmen 7 angeformt. Die Kunststoffdorne werden in Nietköpfe 15 umgeformt (siehe Abb. 4). Auf die Herstellung der Nietköpfe soll später eingegangen werden. Ferner weist das Verbindungselement 6 Aussparungen 13 auf, so dass die nicht dargestellten Ableiter elektrisch kontaktiert werden können.

Fig. 2 zeigt eine schematische Ansicht einer erfindungsgemäßen Flachzelle 2 mit Rahmen 7 entlang der Linie II-II aus Fig. 1, insbesondere die formschlüssige Anbindung der flächigen Seite 3 der Flachzelle 2 an den Rahmen 7.

Fig. 4 zeigt zwei Flachzellen 2 einer erfindungsgemäßen Energiespeichereinheit gemäß einem weiteren Ausführungsbeispiel und ferner die Anbindung der Flachzellen an eine Wärmesenke 9.

Gemäß Fig. 4 wird der Ableiter 4 über die Stirnseite 5 aus einer ersten Flachzelle 2 herausgeführt und über ein Verbindungselement 6 mit einem Ableiter 4 einer weiteren Zelle 2 elektrisch und mechanisch kontaktiert. Die Verbindung zwischen dem Ableiter 4 und dem Verbindungselement 6 wird durch ein stoffschlüssiges Verfahren, insbesondere durch ein Ultraschallschweißverfahren, realisiert. Alternativ ist es auch möglich die Verbindung durch ein anderes Verfahren, beispielsweise durch ein Lötverfahren, herzustellen.

Bevorzugt werden die Ableiter 4 bezüglich benachbarter Flachzellen so miteinander verbunden, dass die Flachzellen in dem Stapel gemäß Fig. 3 seriell verschaltet sind. Zur Vereinfachung dieser Kontaktierung sind die Ausrichtungen der Ableiter in dem Stapel gemäß Fig. 3 alternierend, so dass auf einer Seite jeweils ein negativer Pol neben einem positiven Pol der angrenzenden Flachzelle angeordnet ist. Selbstverständlich können die Flachzellen je nach Einsatzzweck auch parallel verschaltet werden.

Das Verbindungselement 6, das bevorzugt aus Kupfer oder Aluminium besteht, ist U-förmig ausgebildet und gemäß Fig. 4 mit Durchbrüchen 12 versehen, die als Aufnahme für Dorne 14 dienen, die, wie bereits erwähnt einstückig an den Rahmen 7 angeformt sind. Durch die Dorne 14, beziehungsweise Nietköpfe 15, die bevorzugt aus Kunststoff bestehen, wird eine mechanische Verbindung zwischen dem Verbindungselement 6 und einer Wärmesenke 9 sichergestellt. Um die Nietköpfe in einem Arbeitsgang auszuformen, kann beispielsweise eine beheizte mit Noppen versehene Form kurz aufgepresst werden.

Die Wärmesenke 9 ist nur schematisch dargestellt und kann beispielsweise aus einem oder mehreren Flachrohren, durch die ein Kälte- oder Kühlmittelmittel strömt, bestehen. Natürlich ist es auch möglich die Wärmesenke mit Kühlluft zu beströmen.

Gemäß Fig. 4 ist zwischen der Wärmesenke 9 und dem Verbindungselement 6 eine Wärmeleitfolie 10 angeordnet. Die Wärmeleitfolie 10 dient einerseits dazu, die Wärme aus dem Verbindungselement 6 an die Wärmesenke 9 abzugeben und andererseits dazu, einen Kurzschluss der einzelnen Zellen über die Wärmesenke 9 zu vermeiden.

Durch diese Ausführungsform wird eine relativ einfache und bauraumsparende thermische Anbindung der Wärmesenke an die Flachzelle realisiert, da die Wärme über die Ableiter und das Verbindungselement zur Wärmesenke transportiert wird und somit auf Kühlplatten oder Umströmungskanäle für ein Kühlmedium zwischen den Flachzellen verzichtet werden kann.

Gemäß Fig. 4 werden die Flachzellen 2 zu baugleichen Zell-Paaren zusammengefasst. Größere Zellstapel werden aus baugleichen Zell-Paaren aufgebaut, wobei weitere in Fig. 4 nicht dargestellte Zellpaare über ein kompressibles Vlies oder einen Schaumstoff 11, der parallel zur flächigen Seite 3 der Flachzelle 2 angeordnet ist, angefügt werden können. Das Vlies stellt eine Ausgleichsschicht dar, mit der die Dickentoleranz der wenig kompressiblen Zellen durch Vorspannung ausgeglichen und damit ein Zellstapel mit gleichmäßiger Teilung dargestellt werden kann. Die gleichmäßige Teilung ist notwendig, weil jede Flachzelle definiert elektrisch kontaktiert werden muss. Weiterhin ermöglicht das Vlies eine Dickenschwankung der Zeiten, die sich abhängig vom Ladezustand ergibt.

Besonders bevorzugt ist hierbei die Dicke des Vlieses im unkomprimierten Zustand größer als der Freiraum zwischen den einzelnen Zellen. Beträgt der Spalt zwischen zwei Zellen beispielsweise 0,5 mm, so wird ein Vlies eingebracht, das im unkomprimierten Zustand 0,6 mm aufweist und sich bis auf 0,25 mm komprimieren lässt. Somit wird einerseits eine Dickenschwankung der Zellen abhängig vom Ladezustand ermöglicht, andererseits ein definierter Druck auf die Zelle ausgeübt, so dass die Kontaktierung der einzelnen Lagen in der Zelle über die Lebensdauer optimal bleibt.

Zusätzlich kann das Füllmaterial, insbesondere das Vlies oder der Schaumstoff, mit flammhemmenden Eigenschaften ausgerüstet werden. Kommt es beispielsweise durch Überladung oder Kurzschluss einer Zelle in weiterer Folge zu einer Überhitzung und zu einem Ausströmen von heißen Gasen aus der Zelle, so verhindert beziehungsweise reduziert das Füllmaterial das Übergreifen auf andere Zellen.

Bei dem Ausführungsbeispiel nach Fig. 4 ist die thermische Anbindung der Wärmesenke 9 an die erste Stirnseite 5 der Flachzellen 2 dargestellt. In einer nicht gezeigten Ausführungsform kann eine im Wesentlichen baugleiche thermische Anbindung an die zweite nicht dargestellte Stirnseite der Flachzellen realisiert werden.

## Patentansprüche

1. Elektrochemische Energiespeichereinheit (1), umfassend eine Mehrzahl von Flachzellen (2), jeweils umfassend mindestens zwei Ableiter (4) und eine Ummantelung mit einer ersten und einer zweiten Stirnseite (5) und einer ersten und einer zweiten flächigen Seite (3), wobei die Mehrzahl an Flachzellen mit ihren im wesentlichen parallel zueinander angeordneten flächigen Seiten (3) stapelartig übereinander angeordnet sind, wobei die Ableiter zumindest teilweise aus der ersten und/oder zweiten Stirnseite hervortreten und zumindest ein Ableiter einer ersten Flachzelle mit zumindest einem Ableiter einer zweiten Flachzelle über zumindest ein Verbindungselement (6) elektrisch miteinander verbunden sind, wobei zwischen den flächigen Seiten benachbarter Flachzellen ein Rahmen (7) angeordnet ist, wobei das Verbindungselement zumindest mittelbar mit einer Wärmesenke (9) in thermischen Kontakt steht, **dadurch gekennzeichnet, dass** die Wärmesenke form- und/oder kraftschlüssig durch Niete mit dem Verbindungselement verbunden ist und die Niete einstückig am Rahmen (7) angeformt sind.

2. Elektrochemische Energiespeichereinheit nach Anspruch 1, **dadurch gekennzeichnet, dass** der Rahmen form- und/oder stoffschlüssig mit der Flachzelle verbunden ist.

3. Elektrochemische Energiespeichereinheit nach Anspruch 1 oder 2, **dadurch gekennzeichnet, dass** der Rahmen aus Kunststoff ist.

4. Elektrochemische Energiespeichereinheit nach einem der vorhergehenden Ansprüche, **dadurch gekennzeichnet, dass** der Rahmen eine rechteckige Form aufweist und an seinen Ecken Positionier- und/oder Verbindungsmittel (8) aufweist.

5. Elektrochemische Energiespeichereinheit nach einem der vorhergehenden Ansprüche, **dadurch gekennzeichnet, dass** die Ableiter stoffschlüssig mit einem Verbindungselement (6) verbunden sind.

6. Elektrochemische Energiespeichereinheit nach einem der vorhergehenden Ansprüche, **dadurch gekennzeichnet, dass** das Verbindungselement aus Metall besteht.

7. Elektrochemische Energiespeichereinheit nach einem der vorhergehenden Ansprüche, **dadurch gekennzeichnet, dass** die Wärmesenke plattenförmig ausgebildet ist.

8. Elektrochemische Energiespeichereinheit nach einem der vorhergehenden Ansprüche, **dadurch gekennzeichnet, dass** die Wärmesenke aus mindestens einem fluiddurchströmbaren Rohr besteht.

9. Elektrochemische Energiespeichereinheit nach Anspruch 8, **dadurch gekennzeichnet, dass** das Fluid ein Kältemittel ist.

10. Elektrochemische Energiespeichereinheit nach einem der vorhergehenden Ansprüche, **dadurch gekennzeichnet, dass** zwischen dem Verbindungselement und der Wärmesenke eine Schicht angeordnet ist.

11. Elektrochemische Energiespeichereinheit nach Anspruch 10, **dadurch gekennzeichnet, dass** die Schicht elektrisch isolierend wirkt.

12. Elektrochemische Energiespeichereinheit nach einem der vorhergehenden Ansprüche, **dadurch gekennzeichnet, dass** zwischen benachbarten Flachzellen ein Vlies oder ein Schaumstoff (11) angeordnet ist.

## Claims

1. An electrochemical energy storage unit (1), comprising a multitude of flat cells (2), each comprising at least two deflectors (4) and a casing having a first and a second front side (5), and a first and a second two-dimensional side (3), wherein the multitude of flat cells has two-dimensional sides (3) disposed essentially parallel to each other, which are disposed on top of each other in the manner of a stack, wherein the deflectors project at least partially from the first and/or from the second front side, and at least one deflector of a first flat cell is electrically connected with at least one deflector of a second flat cell via at least one connection member (6), wherein a frame (7) is disposed between the two-dimensional sides of adjacent flat cells, wherein the connection member is at least indirectly in thermal contact with a heat sink (9), **characterized in that** the heat sink is connected to the connection member via a rivet in a positive and/or non-positive fit, and the rivet is integrally formed on the frame (7) as one piece.

2. The electrochemical energy storage unit according to claim 1, **characterized in that** the frame is connected to the flat cell in a positive and/or non-positive fit.

3. The electrochemical energy storage unit according to claim 1 or 2, **characterized in that** the frame is made from plastic material.

4. The electrochemical energy storage unit according to one of the previous claims, **characterized in that** the frame has a rectangular shape, and has positioning and/or connecting means (8) at the corners thereof.

5. The electrochemical energy storage unit according to one of the previous claims, **characterized in that** the deflectors are connected with a connecting member (6) in a positive fit.

6. The electrochemical energy storage unit according to one of the previous claims, **characterized in that** the connecting member consists of metal.

7. The electrochemical energy storage unit according to one of the previous claims, **characterized in that** the heat sink is embodied in the shape of plates.

8. The electrochemical energy storage unit according to one of the previous claims, **characterized in that** the heat sink consists of at least one pipe through which a fluid may flow.

9. The electrochemical energy storage unit according to claim 8, **characterized in that** the fluid is a cooling medium.

10. The electrochemical energy storage unit according to one of the previous claims, **characterized in that** a layer is disposed between the connecting member and the heat sink.

11. The electrochemical energy storage unit according to claim 10, **characterized in that** the layer has an electrically insulating effect.

12. The electrochemical energy storage unit according to one of the previous claims, **characterized in that** a non-woven material or a foam material (11) is disposed between adjacent flat cells.

## Revendications

1. Accumulateur d'énergie électrochimique (1) comprenant une pluralité d'éléments plats (2), comprenant à chaque fois au moins deux parafoudres (4) et une enveloppe comportant un premier et un second côté frontal (5) et un premier et un second côté (3) de grande étendue, où les éléments plats formant une pluralité de composants sont disposés en étant superposés en forme de piles, leurs côtés (3) de grande étendue étant disposés pratiquement de façon parallèle les uns aux autres, où les parafoudres sont au moins partiellement en saillie par rapport au premier et/ou au second côté frontal, et au moins un parafoudre d'un premier élément plat est connecté électriquement, par au moins un élément d'assemblage (6), à au moins un parafoudre d'un deuxième élément plat, où un cadre (7) est disposé entre les côtés de grande étendue d'éléments plats voisins, où l'élément d'assemblage est en contact thermique au moins au moyen d'un dissipateur thermique (9), **caractérisé en ce que** le dissipateur thermique est assemblé avec l'élément d'assemblage, par des rivets, par complémentarité de forme et/ou par action de force, et les rivets sont réalisés sur le cadre (7) en formant avec lui une seule et même pièce.

2. Accumulateur d'énergie électrochimique selon la revendication 1, **caractérisé en ce que** le cadre est assemblé avec l'élément plat, par complémentarité de forme et/ou par action de force.

3. Accumulateur d'énergie électrochimique selon la revendication 1 ou 2, **caractérisé en ce que** le cadre est en matière plastique.

4. Accumulateur d'énergie électrochimique selon l'une quelconque des revendications précédentes, **caractérisé en ce que** le cadre présente une forme rectangulaire et présente, au niveau de ses parties angulaires, des moyens de positionnement et/ou d'assemblage (8).

5. Accumulateur d'énergie électrochimique selon l'une quelconque des revendications précédentes, **caractérisé en ce que** les parafoudres sont assemblés avec un élément d'assemblage (6), par continuité de matière.

6. Accumulateur d'énergie électrochimique selon l'une quelconque des revendications précédentes, **caractérisé en ce que** l'élément d'assemblage est en métal.

7. Accumulateur d'énergie électrochimique selon l'une quelconque des revendications précédentes, **caractérisé en ce que** le dissipateur thermique est conçu en forme de plaques.

8. Accumulateur d'énergie électrochimique selon l'une quelconque des revendications précédentes, **caractérisé en ce que** le dissipateur thermique se compose d'au moins un tube pouvant être traversé par un fluide.

9. Accumulateur d'énergie électrochimique selon la revendication 8, **caractérisé en ce que** le fluide est un fluide frigorigène.

10. Accumulateur d'énergie électrochimique selon l'une quelconque des revendications précédentes, **caractérisé en ce qu'**une couche est disposée entre l'élément d'assemblage et le dissipateur thermique.

11. Accumulateur d'énergie électrochimique selon la revendication 10, **caractérisé en ce que** la couche agit en étant électroisolante.

12. Accumulateur d'énergie électrochimique selon l'une quelconque des revendications précédentes, **caractérisé en ce qu'**un tissu non tissé ou une mousse de plastique (11) est disposé(e) entre des éléments plats voisins.
